# EUROPÄISCHE PATENTSCHRIFT

(11) **EP 2 193 862 B1**
(45) Veröffentlichungstag und Bekanntmachung des Hinweises auf die Patenterteilung: **06.07.2011**
(21) Anmeldenummer: 08171014.7
(22) Anmeldetag: 08.12.2008
(51) Int. Cl.: B22F 1/00, B22F 3/10, B22F 9/04, C22C 9/00, C22B 1/248, C22B 9/14, C22C 1/04

(54) **Verwendung von CuCr-Abfallspänen für die Herstellung von CuCr-Kontaktrohlingen**
Use of CuCr waste shavings for the production of CuCr contact blanks
Utilisation de copeaux résiduels de CuCr pour la fabrication d'ébauches de contact CuCr

(43) Veröffentlichungstag der Anmeldung: 09.06.2010
(73) Patentinhaber: Umicore AG & Co. KG, 63457 Hanau (DE)
(72) Erfinder: Gleissner, Karl-Heinz, D-63755, Alzenau (DE); Boehme, Carsten, 63791, Karben (DE); Warwas, Torsten, D-63579, Freigericht (DE)

(56) Entgegenhaltungen:
- EP-A- 0 256 233
- US-A- 5 211 744
- XIAN AI-PING: "Cu-Cr contact materials for high power vacuum interrupters" ZHONGGUO YOUSE JINSHU XUEBAO - TRANSACTIONS OF NONFERROUS METALSSOCIETY OF CHINA, GAI-KAN-BIAN-WEI-HUI, CHANSHA, CN, Bd. 11, Nr. 5, 1. Oktober 2001 (2001-10-01), Seiten 731-740, XP009096538 ISSN: 1004-0609 & DATABASE INSPEC [Online] THE INSTITUTION OF ELECTRICAL ENGINEERS, STEVENAGE, GB; Oktober 2001 (2001-10), XIAN AI-PING: "Cu-Cr contact materials for high power vacuum interrupters" XP002537039 Database accession no. 7077117 & Chinese Journal of Nonferrous Metals Editorial Office of Chinese J. Nonferrous Met China, Bd. 11, Nr. 5, Oktober 2001 (2001-10), Seiten 731-740, ISSN: 1004-0609

## Beschreibung

Die Erfindung betrifft die Verwendung von CuCr-Abfallspänen für die Herstellung von CuCr-Kontaktrohlingen oder -Abschirmringen.

Für Vakuumschalter werden unter anderem Kontaktwerkstoffe aus Kupfer und Chrom eingesetzt. Typische Zusammensetzungen dieser Kontaktwerkstoffe sind CuCr25 bis CuCr50 mit 25 beziehungsweise 50 Masseprozent Chrom. Das Gefüge dieser Kontaktwerkstoffe besteht aus mehr oder weniger fein verteilten Bereichen von Chrom in einer Kupfermatrix. Es sind drei verschiedene Techniken zur Herstellung dieser Kontaktwerkstoffe bekannt:
- Herstellung durch Vakuumschmelzen und -gießen
   Die schnelle Entmischung des sich ausscheidenden Chroms verlangt spezielle Vakuumumschmelz- und gießtechniken mit schneller Abkühlung, um eine Entmischung bei der Erstarrung zu verhindern. Dies erlaubt lediglich das Umschmelzen beziehungsweise Abgießen von Bolzen, die zu Scheiben geschnitten und weiterverarbeitet werden.
- Herstellung durch Vakuuminfiltration
   Die Infiltration von CuCr-Schüttungen beziehungsweise von handhabbaren porösen CuCr-Preßronden mit flüssigem Kupfer führt in der Regel zu CuCr-Rohlingen in Scheibenform mit Cr-Gehalten > 25 %.
- Pulvermetallurgische Fertigung (Pressen und Vakuumsintern)
   Stand der pulvermetallurgischen Fertigung von CuCr-Kontaktwerkstoffen ist die Verdichtung von CuCr-Pulvermischungen durch einachsiges Matrizenpressen zu Ronden, die im Vakuum gesintert werden.

Bei allen drei heute üblichen Verfahren wird der Kontaktwerkstoff als Rohling in Form einer Ronde hergestellt und durch Zerspanung in die Endform des Kontaktes überführt. Aufgrund seiner Struktur aus zähen Chrompartikeln in einer duktilen Kupfermatrix sind CuCr-Kontaktwerkstoffe schwer zerspanbar und verursachen kurze Werkzeugstandzeiten. Für die Zerspanung werden gewöhnlich Fräsmaschinen mit Hartmetallfräsern verwendet. Die Zerspanung von pulvermetallurgisch hergestellten CuCr-Ronden wird trocken ohne den Zusatz von Schmierstoffen vorgenommen. Die Späne weisen eine typische Spanbreite von 1 mm, eine mittlere Spanlänge von 2 mm und eine Spandicke von bis zu 1 mm auf. Ihre Schüttdichte liegt bei etwa 1 g/cm³, der Sauerstoffgehalt beträgt gewöhnlich 550 bis 600 ppm.

Der überwiegende Teil von CuCr-Kontaktwerkstoffen wird in Europa auf pulvermetallurgischem Wege hergestellt. Dieses Verfahren ist robust und kann mit marktüblicher Anlagentechnik betrieben werden. Die vorliegende Erfindung befasst sich mit dieser pulvermetallurgischen Fertigung von CuCr-Kontaktwerkstoffen. Gemäß dem Stand der Technik dienen als Ausgangsmaterial für die Herstellung der Kontaktwerkstoffe Elementpulver aus Kupfer und Chrom mit einer mittleren Korngröße d₅₀ von weniger als 150 µm. Die beiden Pulver werden im gewünschten Gewichtsverhältnis von Kupfer zu Chrom miteinander vermischt, kompaktiert und bei einer Temperatur oberhalb von 800 °C unter Vakuum zu Rohlingen gesintert.

Eine wesentliche Anforderung an die gesinterten Kontaktwerkstoffe ist ihre Gasdichtheit. Diese ist nur gewährleistet, wenn der fertige Kontaktwerkstoff bevorzugt wenigstens 95 % der theoretischen Dichte entsprechend seiner Zusammensetzung aus Kupfer und Chrom aufweist. Für einen CuCr25-Kontaktwerktstoff bedeutet dies eine Dichte von mehr als 8 g/cm³ bei einer theoretischen Dichte von 8,44 g/cm³. Der fertige Werkstoff sollte darüber hinaus einen geringen Sauerstoffgehalt haben; typischerweise weniger als 600 ppm O₂.

Die gesinterten Rohlinge werden durch mechanische Zerspanung zu den in den Vakuumschaltern eingesetzten Kontaktwerkstücken verarbeitet. Je nach Konstruktion der Schalter werden dabei zwischen 25 und 45 Gew.-% der Rohlinge zerspant. Die Späne werden bisher als Schrott entsorgt.

Die Verschrottung der Späne bedeutet einen hohen Verlust an wertvollem Material und verteuert die Herstellung der Kontaktwerkstücke erheblich.

Der Artikel "Cu-Cr contact materials for high power vacuum interrupters" von Xian-Ai Ping, Transactions of Nonferrous Metals Society of China, Band 11, Nr.5, Seiten 731 bis 740 vom 1.10.2001 beschreibt die Herstellung von CuCr-Kontaktrohlingen durch Gießen, was den Vorteil hat, daß CuCr-Abfallspäne durch Wiedereinschmelzen und Neuherstellung von CuCr-Kontaktrohlingen wiederverwertet werden können.

EP-A-256 233 beschreibt die Wiederverwertung von metallischen Abfallspänen durch Aufschmelzen und Herstellung sphärischer Pulverpartikel.

Aufgabe der Erfindung war es daher ein kostengünstigeres Verfahren zur Herstellung von CuCr-Kontaktwerkstücken zu entwickeln.

Die Aufgabe wird gelöst durch die Verwendung von CuCr-Spänen, die bei der Bearbeitung und Zerspanung von CuCr-Kontaktrohlingen zu Kontakten und Abschirmringen von Vakuumleistungsschaltern anfallen, für die Herstellung von neuen CuCr-Kontaktrohlingen oder Abschirmringen
**gekennzeichnet durch die Schritte**,
a) Befreien der Abfallspäne von Hartmetallverunreinigungen aus der vorhergehenden Zerspanung der Kontaktrohlinge,
b) Zerkleinern der Späne zu einem Granulat mit einer Schüttdichte größer als 1 g/cm³
c) Kompaktieren des Granulates zu einem Grünkörper,
d) und Sintern des Grünkörpers bei einer Temperatur oberhalb von 800 °C zu den fertigen CuCr-Kontaktrohlingen.

Es wurde gefunden, daß die Verwendung der Abfallspäne zu keinerlei Einbußen bei den Schalteigenschaften der fertigen Kontaktstücke führt. Hilfreich ist hierbei die Tatsache, daß die mechanische Zerspanung der Kontaktrohlinge ohne den Zusatz von Schmiermitteln erfolgt. Die Späne müssen daher vor der Wiederverwendung nicht aufwendig gewaschen werden. Allerdings wurde gefunden, daß die Späne mit bis zu 0,05 Gew.-% Abrieb oder Bruchstücke von Hartmetallfräsern aus der Zerspanung der Kontaktrohlinge verunreinigt sein können. Bevorzugt werden diese Hartmetallverunreinigungen vor der Wiederverwendung der Späne entfernt.

Erfindungsgemäß werden zuerst die Hartmetallverunreinigungen aus den Abfallspänen entfernt. Diese Hartmetallverunreinigungen stammen von der Zerspanung der Kontaktrohlinge mit Hartmetallfräsern. Die gereinigten Abfallspäne können jedoch nicht sofort wieder zu neuen Kontaktrohlingen verpreßt werden, da die Späne zu groß sind, um daraus Kontaktrohlinge mit einer ausreichenden Dichte zu pressen. Die Abfallspäne müssen daher entsprechend zerkleinert oder granuliert werden. Es hat sich gezeigt, daß sich das Granulat zu Grünlingen mit einer ausreichenden Dichte kompaktieren läßt, wenn die Späne soweit zerkleinert werden, daß das resultierende Granulat eine Schüttdichte von wenigstens 1 g/cm³, bevorzugt von wenigstens 2 g/cm³ und besonders bevorzugt von wenigstens 2,5 g/cm³ aufweist. Die Grünkörper werden anschließend im Vakuum bei einer Temperatur von mehr als 800 °C, besonders von mehr als 900 °C, zu den fertigen CuCr-Kontaktrohlingen gesintert.

Bei der Zerspanung der Kontaktrohlinge kann der Sauerstoffgehalt der Späne auf über 600 ppm ansteigen. In einer besonders vorteilhaften Ausführungsform werden die Abfallspäne deshalb vor oder nach der Granulation unter einer reduzierenden Atmosphäre zwischen 250 und 450 °C zur Verminderung des Sauerstoffgehaltes und zur Verbesserung der Verpressbarkeit geglüht.

Die so hergestellten CuCr-Kontaktrohlinge bestehen ausschließlich aus wiederverwendetem Material. In einer bevorzugten Ausführungsform werden jedoch dem in Schritt b) erhaltenem Granulat frisches Kupfer- und Chrompulver mit mittleren Korngrößen d₅₀ zwischen 40 und 150 µm im gewünschten Gewichtsverhältnis zugesetzt. Dabei kann für das Chrompulver ein größerer d₅₀-Durchmesser gewählt werden als für das Kupferpulver. Durch Mischen der zerkleinerten Späne mit frischem Kupfer- und Chrompulver erhöht sich die Schüttdichte vor dem Kompaktieren, was nach den Erfahrungen der Erfinder zu einer höheren Dichte nach dem Sintern und damit auch zu einer besseren Gasdichtheit der Kontaktrohlinge führt.

Der Zusatz der frischen Elementpulver verbessert die Verpressbarkeit der Granulat-/Pulvermischung. Überraschenderweise hat sich gezeigt, daß die Mischung aus dem Granulat der Abfallspäne und den Elementpulvern sogar zu einer etwas höheren Dichte der Kontaktrohlinge nach dem Sintern führt als wenn nur Granulat oder nur Elementpulver für die Herstellung der Grünkörper eingesetzt werden. Weiterhin ist die Vermischung des Granulats mit den feineren und sinteraktiveren frischen Elementpulvern vorteilhaft um den Sauerstoffgehalt zu senken.

Die Hartmetallverunreinigungen in Schritt a) können in einfacher Weise mit Hilfe von Magneten aus den Spänen entfernt werden. Dies kann sowohl vor als auch nach der Zerkleinerung in Schritt b) erfolgen.

Die zur Wiederverwendung bestimmten Späne dienen bei der Mischung des Granulats mit frischen Elementpulvern also als Zuschlagstoff bei der Herstellung neuer Kontaktrohlinge. Dabei betragen die Elementpulver des Kupfers und Chroms bevorzugt 40 bis 80 Gew.-% bezogen auf das Gesamtgewicht der Granulat-/Pulvermischung.

Bevorzugt wird der Grünkörper in Schritt d) in einer wasserstoffhaltigen Atmosphäre gesintert, um den Sauerstoffgehalt des fertigen Kontaktwerkstoffes auf einen Wert unter 500 ppm abzusenken.

Mit Hilfe der erfindungsgemäßen Verwendung von Abfallspänen aus der Verarbeitung von Kontaktrohlingen können neue CuCr-Kontaktrohlinge hergestellt werden, die bevorzugt zu 40 bis 90 Gew.-% aus Kupfer und zu 60 bis 10 Gew.-% aus Chrom bestehen, insbesondere zu 75 Gew.-% aus Kupfer und zu 25 Gew.-% aus Chrom.

Die aus den so hergestellten Kontaktrohlingen gefertigten Kontaktstücke unterscheiden sich bezüglich ihrer Anwendungsdaten nur unwesentlich von ausschließlich aus frischen Elementpulvern hergestellten Kontaktstücken. Sie lassen sich jedoch durch die Wiederverwendung der Abfallspäne deutlich kostengünstiger herstellen.

Die folgenden Beispiele sollen die Erfindung näher erläutern.

### Beispiel 1

1 kg Späne aus der Bearbeitung und Zerspanung von CuCr25-Kontaktrohlingen wurden für die Dauer von 2 Minuten in einem Mischer mit Schneidrotor zerkleinert. Anschließend wurden die Hartstoffverunreinigungen mit Hilfe eines Magneten entfernt. Durch diese Zerkleinerung stieg die Schüttdichte von 1 g/cm³ der Späne auf etwa 3 g/cm³ nach der Zerkleinerung.

Zu den zerkleinerten Spänen wurden 1,5 kg an Elementpulvern des Kupfers und Chroms im Gewichtsverhältnis von 3:1 zugefügt. Anschließend wurde diese Mischung im gleichen Mischer erneut für die Dauer von 5 Minuten homogenisiert. Das Ergebnis war eine homogene CuCr25-Mischung mit 40 Gew.-% Späneanteil und einer Schüttdichte von 3,8 g/cm³.

Die so gewonnene Mischung wurde in die Preßform einer Presse für die Herstellung von Ronden mit einem Durchmesser von 54 mm und einer Höhe von 11 mm eingefüllt. Die Füllhöhe betrug 29 mm, und die Füllmenge 252 g. Nach dem Kompaktieren mit einer Presskraft von 200 t wurde ein Grünkörper mit einer Dichte von 7,88 g/cm³ erhalten. Dieser Grünkörper wurde anschließend bei einer Temperatur von 900 °C in einem Vakuum-Sinterofen für die Dauer von zwei Stunden gesintert. Die gesinterte Ronde hatte eine Dichte von 8,14 g/cm³. Ihr Sauerstoffgehalt betrug 514 ppm und ihr Stickstoffgehalt 6 ppm.

### Beispiel 2

29,16 kg Späne wurden zunächst mit Hilfe eines Magneten von enthaltenen Hartmetallverunreinigungen befreit. Insgesamt wurden 4,4 g Hartmetall entfernt. Anschließend wurden die Späne für die Dauer von 30 Minuten in einem Mischer mit Schneidrotor zerkleinert. Hierbei stieg die Schüttdichte von 1 g/cm³ auf 2,15 g/cm³ an. Die Gasgehalte betrugen nach der Zerkleinerung 579 ppm Sauerstoff und 13,5 ppm Stickstoff.

Zu den zerkleinerten Spänen wurden 32,8 kg Kupferpulver und 19,935 kg Chrompulver hinzugefügt. Diese Mischung wurde dann im Schneidrotor für die Dauer von 35 Minuten homogenisiert. Als Ergebnis wurde eine homogene Pulvermischung von 72,9 kg einer CuCr25-Mischung mit 40 Gew.-% Späneanteil erhalten.

Aus dieser Pulvermischung wurden anschließend wie in Beispiel 1 beschrieben in einer Presse kompaktierte Grünkörper hergestellt. Die Dichte der Grünkörper betrug 7,91 g/cm³. Die Grünkörper wurden dann im Vakuum-Sinterofen gesintert. Die gesinterten Ronden hatten eine Dichte von 8,2 g/cm³, einen Sauerstoffgehalt von 548 ppm und einen Stickstoffgehalt von 14 ppm.

Die gesinterten Ronden unterschieden sich sowohl äußerlich als auch vom Gefüge und der Mikrostruktur her nicht von Ronden aus der konventionellen Produktion, die allein aus frischen Elementpulvern hergestellt wurden. Auch die Gasgehalte lagen innerhalb der Toleranzgrenzen für solche Kontaktwerkstoffe. Im Vergleich zu vollständig aus Elementpulvern hergestellten Kontaktrohlingen wiesen die erfindungsgemäß hergestellten Kontaktrohlinge eine von 8,10 g/cm³ auf 8,14 beziehungsweise 8,2 g/cm³ erhöhte Sinterdichte auf.

Eine befürchtete Entmischung der Kupfer/Chrom-Elementpulver von den als Zuschlagstoff verwendeten gröberen Pulver aus den CuCr-Abfallspänen wurde nicht beobachtet.

## Patentansprüche

1. Verwendung von CuCr-Spänen, die bei der Bearbeitung und Zerspanung von CuCr-Kontaktrohlingen zu Kontakten und Abschirmringen von Vakuumleistungsschaltern anfallen, für die Herstellung von neuen CuCr-Kontaktrohlingen oder Abschirmringen
**gekennzeichnet durch die Schritte**,
a) Befreien der CuCr-späne von Hartmetallverunreinigungen aus der vorhergehenden Zerspanung der Kontaktrohlinge,
b) Zerkleinern der Späne zu einem Granulat mit einer Schüttdichte größer als 1 g/cm³ vor oder nach Schritt a),
c) Kompaktieren des Granulates zu einem Grünkörper,
d) und Sintern des Grünkörpers bei einer Temperatur oberhalb von 800 °C zu den fertigen CuCr-Kontaktrohlingen.

2. Verwendung nach Anspruch 1,
**dadurch gekennzeichnet,**
**daß** dem in Schritt b) erhaltenem Granulat frisches Kupfer- und Chrompulver mit mittleren Korngrößen d₅₀ zwischen 40 und 150 µm im gewünschten Gewichtsverhältnis zugesetzt und durch Mischen homogenisiert wird.

3. Verwendung nach Anspruch 2,
**dadurch gekennzeichnet,**
**daß** die Menge des zugesetzten Kupfer- und Chrompulvers 40 bis 80 Gew.-% bezogen auf das Gesamtgewicht der Pulvermischung beträgt.

4. Verwendung nach Anspruch 3,
**dadurch gekennzeichnet,**
**daß** der Grünkörper in Schritt d) in einer wasserstoffhaltigen Atmosphäre gesintert wird.

5. Verwendung nach Anspruch 4,
**dadurch gekennzeichnet,**
**daß** die Späne bei einem Sauerstoffgehalt von mehr als 600 ppm vor oder nach der Zerkleinerung im Schritt b) einer Reduktionsbehandlung in einer wasserstoffhaltigen Atmosphäre unterzogen werden.

6. Verwendung nach einem der vorstehenden Ansprüche,
**dadurch gekennzeichnet,**
**daß** die CuCr-Kontaktrohlinge zu 40 bis 90 Gew.-% aus Kupfer und zu 10 bis 60 Gew.-% aus Chrom bestehen.

7. Verwendung nach Anspruch 6,
**dadurch gekennzeichnet,**
**daß** die Kontaktrohlinge zu 75 Gew.-% aus Kupfer und zu 25 Gew.-% aus Chrom bestehen.

## Claims

1. Use of CuCr turnings obtained in the shaping and cutting machining of CuCr contact blanks to produce contacts and shielding rings of high-power vacuum circuit breakers for the production of new CuCr contact blanks or shielding rings, **characterized by** the steps
a) freeing of the CuCr turnings of cemented carbide contamination from the prior cutting machining of the contact blanks,
b) comminution of the turnings to give a granular material having a bulk density of greater than 1 g/cm³ before or after step a),
c) compacting of the granular material to form a green body,
d) and sintering of the green body at a temperature above 800°C to give the finished CuCr contact blanks.

2. Use according to Claim 1, **characterized in that** fresh copper powder and chromium powder having average particle sizes d₅₀ in the range from 40 to 150 µm are added in the desired weight ratio to the granular material obtained in step b) and that the mixture is homogenized by mixing.

3. Use according to Claim 2, **characterized in that** the amount of copper powder and chromium powder added is from 40 to 80% by weight based on the total weight of the powder mixture.

4. Use according to Claim 3, **characterized in that** the green body is sintered in a hydrogen-containing atmosphere in step d).

5. Use according to Claim 4, **characterized in that** the turnings are in the case of an oxygen content of more than 600 ppm subjected to a reducing treatment in a hydrogen-containing atmosphere before or after comminution in step b).

6. Use according to any of the preceding claims, **characterized in that** the CuCr contact blanks consist of from 40 to 90% by weight of copper and from 10 to 60% by weight of chromium.

7. Use according to Claim 6, **characterized in that** the contact blanks consist of 75% by weight of copper and 25% by weight of chromium.

## Revendications

1. Utilisation des copeaux de CuCr produits lors du traitement et du décolletage d'ébauches de contact en CuCr pour des contacts et des bagues de blindage de commutateurs de puissance sous vide, pour former de nouvelles ébauches de contacts ou de bagues de blindage en CuCr,
**caractérisée par** les étapes qui consistent à
a) débarrasser les copeaux de CuCr des impuretés en métal dur provenant du décolletage antérieur des ébauches de contact,
b) avant ou après l'étape a), déchiqueter les copeaux en un granulé dont la masse spécifique en vrac est supérieure à 1 g/cm³,
c) compacter le granulé pour former un corps cru et
d) fritter le corps cru à une température supérieure à 800°C pour former les ébauches de contact en CuCr prêtes à l'emploi.

2. Utilisation selon la revendication 1, **caractérisée en ce qu'**une poudre fraîche de cuivre et de chrome d'une granulométrie moyenne d₅₀ comprise entre 40 et 150 µm est ajoutée dans les proportions pondérales souhaitées et homogénéisée par mélange aux granulés obtenus à l'étape b).

3. Utilisation selon la revendication 2, **caractérisée en ce que** la quantité de poudre de cuivre et de chrome ajoutée représente de 40 à 80 % en poids du poids total du mélange de poudres.

4. Utilisation selon la revendication 3, **caractérisée en ce qu'**à l'étape d), le corps cru est fritté dans une atmosphère contenant de l'hydrogène.

5. Utilisation selon la revendication 4, **caractérisée en ce que** si la teneur en oxygène est supérieure à 600 ppm avant ou après le déchiquetage de l'étape b), les copeaux subissent un traitement de réduction dans une atmosphère contenant de l'hydrogène.

6. Utilisation selon l'une des revendications précédentes, **caractérisée en ce que** les ébauches de contact en CuCr sont constituées de jusque 40 à 90 % en poids de cuivre et de jusque 10 à 60 % en poids de chrome.

7. Utilisation selon la revendication 6, **caractérisée en ce que** les ébauches de contact sont constituées de jusque 75 % en poids de cuivre et de jusque 25 % en poids de chrome.
